# EUROPÄISCHE PATENTSCHRIFT

(11) **EP 3 444 575 B1**
(45) Veröffentlichungstag und Bekanntmachung des Hinweises auf die Patenterteilung: **18.12.2019**
(21) Anmeldenummer: 18185383.9
(22) Anmeldetag: 25.07.2018
(51) Int. Cl.: G01F 23/24

(54) **SENSORANORDNUNG ZUR POTENTIOMETRISCHEN MESSUNG EINER FÜLLSTANDSHÖHE IN EINEM BEHÄLTER**
SENSOR ARRANGEMENT FOR POTENTIOMETRIC MEASUREMENT OF A LEVEL IN A CONTAINER
DISPOSITIF CAPTEUR DESTINÉ À LA MESURE POTENTIOMETRIQUE D'UNE HAUTEUR DE NIVEAU DE REMPLISSAGE DANS UN RECIPIENT

(30) Priorität: 14.08.2017 DE 102017007946
(43) Veröffentlichungstag der Anmeldung: 20.02.2019
(73) Patentinhaber: Baumer Electric AG, 8500 Frauenfeld (CH)
(72) Erfinder: Fend, Peter, 8501 Frauenfeld (CH); Brändle, Daniel, 8500 Frauenfeld (CH)
(74) Vertreter: Strauss, Steffen

(56) Entgegenhaltungen:
- EP-A1- 1 067 368
- US-A- 4 188 826
- FERRAN REVERTER ET AL: "Stability and accuracy of active shielding for grounded capacitive sensors", MEASUREMENT SCIENCE AND TECHNOLOGY., Bd. 17, Nr. 11, 28. September 2006 (2006-09-28), Seiten 2884-2890, XP055536781, GB ISSN: 0957-0233, DOI: 10.1088/0957-0233/17/11/004
- Wikipedia: "Buffer Amplifier", Wikipedia, 6. Juni 2017 (2017-06-06), XP055536597, Gefunden im Internet: URL:https://en.wikipedia.org/w/index.php?t itle=Buffer_amplifier&oldid=784124319 [gefunden am 2018-12-19]

## Beschreibung

Die Erfindung betrifft eine Sensoranordnung zur potentiometrischen Messung einer Füllstandshöhe in einem Behälter.

Solche Sensoranordnungen sind schon seit langem bekannt und dienen zum Beispiel zur Messung von Behälterinhalten in der chemischen Industrie oder in der Lebensmittelindustrie. Bei diesem Messprinzip wird das Verhältnis der Spannung zwischen einem Elektrodenende und der Behälterwand oder der Gegenelektrode zu der zwischen beiden Elektrodenenden eingespeisten Spannung gemessen. Voraussetzung hierfür ist eine zumindest geringe Leitfähigkeit des Füllguts.

Wird mit einer Wechselspannung ausreichend hoher Frequenz gearbeitet, lässt sich rein physikalisch das besagte potentiometrische Messverfahren auch über das dielektrische Verhalten des Füllgutes, also mit Wirkung seiner elektrischen Kapazität, realisieren.

Aus der Druckschrift EP 1 067 368 A1 ist Pegelstandsmessvorrichtung zur Messung der Standhöhe eines in einem Behälter befindlichen flüssigen Mediums mit einer im Wesentlichen stabförmig elektrischen Sonde, die im Betrieb je nach Standhöhe mehr oder weniger tief in das zu messende Medium eintaucht, bekannt. Eine mit der Sonde zusammenwirkende Messelektronik umfasst eine Speiseeinrichtung zur Beauftragung der Sonde mit elektrischen Wechselstrom und eine Wandlereinrichtung. Die Wandlereinrichtung erfasst eine pegelstandabhängige elektrische Messgröße zwischen der Sonde und dem das Medium enthaltenden Behälter. Es wird hierbei ein die elektrische Messgröße und damit die Standhöhe repräsentierendes elektrisches Ausgangssignal erzeugt.

Nachteilig ist jedoch, dass die Oszillatoranordnung, die die Wechselspannung erzeugt, eine gewisse parasitäre Kapazität zur Elektrodenanordnung und zur Umgebung aufweist und aufgrund praktisch immer vorhandener Asymmetrien ein Gleichtaktanteil der Wechselspannung in die Messspannung überkoppelt. Bei Messungen an Füllgütern, die eine geringe Dielektrizitätskonstante und damit eine geringe Kapazität aufweisen, wird die Messung sehr ungenau, da die parasitäre Kapazität der Oszillatoranordnung mit der Kapazität des Füllgutes vergleichbar wird und der Fehler daher vor allem bei sinkendem Füllstand sehr stark zunimmt. Desweiteren wirken parasitäre Kapazitäten, wie sie z. B. durch Abschirmmaßnahmen entstehen, belastend auf das Messsignal. Neben den parasitären kapazitiven Effekten können auch induktive Störungen in das Messsignal einkoppeln, insbesondere bei Verwendung von induktiven Bauteilen Aufgabe der Erfindung ist es, eine Lösung bereitzustellen, mit der Füllgut mit einer geringen Dielektrizitätskonstante, welches praktisch elektrisch nicht leitend ist, wie beispielsweise reiner Alkohol oder deionisiertes Wasser, zuverlässig gemessen werden kann, insbesondere auch bei niedrigen Füllständen.

Der Umfang der Erfindung wird durch die Ansprüche definiert.

Erfindungsgemäß wird dies gelöst durch eine Sensoranordnung zur potentiometrischen Messung einer Füllstandshöhe in einem Behälter, umfassend eine Oszillatoranordnung zur Erzeugung einer Wechselspannung, wobei die Oszillatoranordnung zumindest teilweise in einer elektromagnetisch abschirmenden Schirmanordnung angeordnet ist, deren Potential von dem Potential des Behälters abhängig ist.

Aufgrund der erfindungsgemäßen Lösung kann sich zwischen dem Behälter, der aufgrund seiner Größe die Umgebung gut repräsentiert, und der Schirmanordnung keine Spannungsdifferenz ausbilden, sodass eine eventuell vorhandene parasitäre Kapazität nicht wirksam werden kann.

Zur Messung weist die Sensoranordnung erfindungsgemäß eine mit der Oszillatoranordnung verbundene, in den Behälter einbringbar ausgestaltete Elektrode auf, die aus der Schirmanordnung ragt.

Um die Ankopplung des Behälters an die Schirmanordnung effizient zu gestalten, ist die Schirmanordnung erfindungsgemäß über einen Impedanzwandler mit dem Behälter verbunden.

Erfindungsgemäß wird ein distales Ende der Elektrode mit einer internen Bezugsmasse des Impedanzwandlers verbunden.

Die erfindungsgemäße Lösung kann mit den folgenden, jeweils für sich vorteilhaften und beliebig miteinander kombinierbaren Ausgestaltungen und Weiterentwicklungen weiter verbessert werden.

Das Potential der Schirmanordnung kann dem Potential des Behälters nachgeführt sein. Eine solche Lösung ist besonders einfach und wirksam. Dazu kann eine Nachführungseinrichtung vorhanden sein, die das Potential der Schirmanordnung dem Potential des Behälters nachführt. Nachführen bedeutet hier, dass das Potential der Schirmanordnung über eine vorbestimmte Gleichung oder eine vorbestimmte Gesetzmäßigkeit mit dem Potential des Behälters gekoppelt ist. Insbesondere kann eine konstante Differenz zwischen den beiden vorhanden sein.

Insbesondere kann die Schirmanordnung auf dem Potential des Behälters liegen, wenn das Messsignal Null ist. Das Messsignal kann beispielsweise Null sein, wenn die Oszillatoranordnung nicht in Betrieb ist oder wenn der Behälter einen bestimmten Füllstand aufweist, etwa komplett voll oder komplett leer. Zur Überprüfung kann das Messsignal natürlich auch künstlich auf Null gebracht werden.

Die Oszillatoranordnung kann eine Wechselspannungsquelle umfassen, wobei die Wechselspannungsquelle in der Schirmanordnung angeordnet ist, um eine gute Abschirmungswirkung zu erzielen.

Ferner kann die Oszillatoranordnung eine Transformatoranordnung umfassen, wobei die Transformatoranordnung in der Schirmanordnung angeordnet ist, um eine gute Abschirmungswirkung zu erzielen.

Insbesondere kann die Oszillatoranordnung vollständig in der Schirmanordnung angeordnet sein. Dadurch ist die Kopplung nach außen minimal.

Zur Erzielung einer bestmöglichen Abschirmung ist die gesamte Elektronik der Sensoranordnung in der Schirmanordnung angeordnet.

In einer vorteilhaften Ausgestaltung ist die Oszillatoranordnung zumindest teilweise, vorzugsweise komplett, außerhalb der Elektrode angeordnet. Die Elektrode kann dadurch besonders klein und kompakt ausgestaltet sein. Auch weitere Teile der Elektronik können außerhalb der Elektrode angeordnet sein. Insbesondere kann in der Elektrode nur ein Stromleiter der Oszillatoranordnung und/oder ein zum Spannungsabgriff dienender Rückführungsleiter angeordnet sein.

Der Impedanzwandler kann in der Schirmanordnung angeordnet sein. Der Impedanzwandler kann an einem Eingang mit dem Behälter verbunden sein. Der Eingang kann dabei hochohmig sein. Ferner kann der Impedanzwandler an seinem Ausgang mit der Schirmanordnung verbunden sein. Der Ausgang kann niederohmig sein. Der Impedanzwandler kann eine Nachführungseinrichtung zum Nachführen des Potential der Schirmanordnung sein.

Ist gleichzeitig der Behälter am Eingang des Impedanzwandlers angeschlossen, so kann am Ausgang ein entkoppeltes Messsignal abgegriffen werden, das als Basispotenzial die interne Bezugsmasse hat.

Um eine induktive Kopplung zu reduzieren, können ein Stromleiter der Oszillatoranordnung und/oder ein zum Spannungsabgriff dienender Rückführungsleiter mit geringem Abstand zu einer Wand der Elektrode, insbesondere über eine Isolierung an der Elektrode anliegend, in der Elektrode geführt sein. Um ein Übersprechen zwischen den beiden zu verhindern, können Sie so geführt sein, dass ihr Abstand zueinander maximal ist.

In einer vorteilhaften Ausgestaltung kann die Sensoranordnung so ausgestaltet sein, dass auch eine Temperaturmessung am distalen Ende der Elektrode möglich ist. Dazu kann die Sensoranordnung mindestens ein erstes elektrisch leitendes Element aus einem ersten Material und mindestens ein zweites elektrisch leitendes Element aus einem zweiten Material umfassen, wobei das erste elektrisch leitende Element und das zweite elektrisch leitende Element entlang eines Strompfades hintereinander liegen, wobei ein Übergangspunkt zwischen dem ersten elektrisch leitenden Element und dem zweiten elektrisch leitenden Element an einem distalen Ende der Elektrode angeordnet ist und weitere Übergangspunkte an mindestens einem vom distalen Ende beabstandeten Temperaturreferenzpunkt angeordnet sind. Weitere Übergangspunkte können außerhalb der Elektrode oder an einem oberen Ende der Elektrode angeordnet sein.

Solche weiteren Übergangspunkte können insbesondere eine konstante Temperatur aufweisen, beispielsweise indem sie temperiert sind. Durch eine Messung der Spannung zwischen den beiden Elementen ist eine Bestimmung der Temperatur möglich.

Um das Signal für die Temperaturmessung zu verstärken, kann eine Verstärkeranordnung vorhanden sein.

Bei dem ersten Material kann es sich um Konstantan handeln, bei dem zweiten Material kann es sich um Edelstahl handeln.

Ferner kann die Sensoranordnung einen Gleichspannungsfilter zum Abtrennen der Gleichspannung aus dem Signal für die Temperaturmessung aufweisen, da vorzugsweise nur dieses zur Bestimmung der Temperatur herangezogen wird.

In einer Ausgestaltung, die besonders kompakt ist, kann die Elektrode das erste elektrisch leitende Element umfassen. Auf ein separates Element kann daher verzichtet werden. Das erste elektrisch leitende Element kann von der Elektrode oder zumindest von einem Teil der Elektrode gebildet sein.

Um die Temperatur zu bestimmen, kann die Sensoranordnung ein Temperaturmessmodul mit einem Eingang umfassen, das dazu ausgestaltet ist, die Spannung zwischen dem ersten elektrisch leitenden Element und dem zweiten elektrisch leitenden Element abzugreifen, wobei an einem Ausgang des Temperaturmessmoduls ein Ausgangssignal ausgebbar ist, das repräsentativ für die Temperatur ist.

In einer anderen Ausgestaltung kann das Rohsignal nach außen geleitet sein und eine Analyse erst außerhalb stattfinden.

Da Störsignale phasenverschieden von der Wechselspannung der Oszillatoranordnung sind, kann die Sensoranordnung ein Filtermodul aufweisen, das aus der Messspannung einen mit der Oszillatoranordnung phasengleichen Anteil und/oder einen phasenverschiedenen Anteil der Wechselspannung herausfiltert. Dadurch ist es möglich, lediglich das Messsignal oder lediglich das Störsignal zu analysieren.

Ein solches Filtermodul kann zum Beispiel mit elektrischen Bauteilen realisiert sein oder als Softwaremodul ausgestaltet sein, bei dem erst eine Trennung des phasengleichen und des phasenverschiedenen Anteils in einer Software stattfindet.

Zur Auswertung kann die Sensoranordnung eine Auswerteeinheit, die den phasengleichen Anteil und/oder den phasenverschiedenen Anteil auswertet, aufweisen.

Zur Spannungsversorgung innerhalb der Schirmanordnung liegender Teile kann die Sensoranordnung einen Transformator aufweisen, der eine außerhalb der Schirmanordnung liegende Primärseite und eine innerhalb der Schirmanordnung liegende Sekundärseite aufweist. Vorteilhafterweise sind dabei die Primärseite und die Sekundärseite galvanisch voneinander getrennt. Beispielsweise kann zwischen der Primärseite und der Sekundärseite ein Luftspalt vorhanden sein. Über den Luftspalt kann eine elektromagnetische Kopplung erfolgen. Auf der Primärseite kann eine Primärspule vorhanden sein, an der Sekundärseite kann eine Sekundärspule vorhanden sein. Die Primärspule kann eine Abschirmung aufweisen, die insbesondere auf dem Potential des Behälters liegen kann. Die Sekundärspule kann eine Abschirmung aufweisen, die auf dem Potential der Schirmanordnung liegen kann. Jede der Abschirmungen kann insbesondere einen dünnschichtigen Metallfilm umfassen. Eine solche Spannungsversorgung kann insbesondere auch kabellos ausgestaltet sein.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

Es zeigen:
- Fig. 1: eine schematische Darstellung einer Ausführungsform; und
- Fig. 2: eine schematische Darstellung eines Details der Ausführungsform aus Fig. 1.

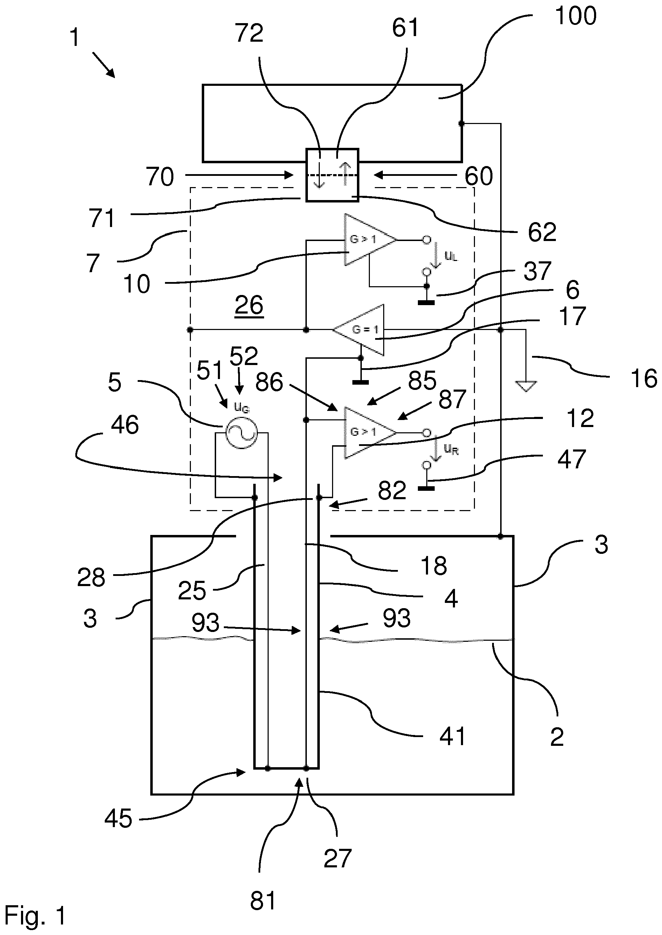

In Fig. 1 ist eine Ausführungsform einer Sensoranordnung 1 zur potentiometrischen Messung einer Füllstandshöhe 2 in einem Behälter 3 dargestellt. Dazu wird durch eine Oszillatoranordnung 5, die einen nicht näher dargestellte Wechselstromgenerator 51 und eine nicht näher dargestellte Transformatoranordnung 52 umfasst, eine Wechselspannung zwischen einem oberen oder proximalen Ende 46 und einem unteren oder distalen Ende 45 einer Elektrode 4 erzeugt.

Die Elektrode 4 ragt in den Behälter 3 und taucht in das Füllgut, das hier zum Beispiel eine Flüssigkeit ist, ein. Dabei kann die Füllstandshöhe 2 ermittelt werden, indem der Spannungsabfall zwischen einem unteren Elektrodenpotential 27 und einem oberen Elektrodenpotential 28 mit der Spannung zwischen dem unteren Elektrodenpotential 27 und dem Behälter 3 verglichen und das Ergebnis ausgewertet wird. Da diese Spannungen klein sind, werden Verstärker 12 und 10 eingesetzt um diese aufzubereiten für eine nachfolgende Auswerteschaltung, beispielsweise mit einem µProzessor mit ADC.

Problematisch ist dabei, dass das Signal relativ schwach ist und normalerweise parasitäre Kapazitäten, die gegenüber der Umgebung auftreten, das Signal beeinflussen.

Erfindungsgemäß wird dies verhindert bzw. verringert, da die Oszillatoranordnung 5 innerhalb einer Schirmanordnung 7 angeordnet ist, deren Potenzial dem Potenzial des Behälters 3 nachgeführt ist. Das Potenzial der Schirmanordnung 7 ist also von dem Potential des Behälters 3 abhängig. Die parasitären Kapazitäten sind dadurch zwar immer noch vorhanden, allerdings stören sie aufgrund der fehlenden Potenzialdifferenz die Messung nicht mehr.

Erfindungsgemäß ist dies dadurch gelöst, dass das untere Elektrodenpotenzial 27 an die interne Bezugsmasse 17 eines Impedanzwandlers 6 angeschlossen ist. Der Eingang des Impedanzwandlers 6 ist mit dem Potential 16 des Behälters 3 verbunden, wobei der Behälter 3 aufgrund seiner Größe die Umgebung gut repräsentiert. Zu beachten ist hier, dass normalerweise der Behälter 3 sehr groß gegenüber der Sensoranordnung 1 ist.

Am Ausgang des Impedanzwandlers 6 ist die Schirmanordnung 7 angeschlossen. Bei einem Messsignal von Null liegt die Schirmanordnung 7 also auf dem gleichen Potenzial wie der Behälter 3.

Die gesamte Sensoranordnung 1 liegt innerhalb der Schirmanordnung 7, also in einem Innenraum 26, der von der Schirmanordnung 7 gebildet ist. Eine Auswerteeinheit 100 liegt außerhalb der Schirmanordnung 7 und ist mit der Sensoranordnung 1 über eine Energieübertragungsanordnung 60 mit einer Energiesendeanordnung 61 und einer Energieempfangsanordnung 62 und über eine Signalübertragungsanordnung 70 mit einer Signalsendeanordnung 71 und einer Signalempfangsanordnung 72 mit dieser verbunden. Die Energieübertragungsanordnung 60 und die Signalübertragungsanordnung 70 können jeweils so ausgelegt sein, dass eine Übertragung ohne elektrischen Kontakt stattfindet, beispielsweise über Licht, insbesondere Laser.

Der Ausgang des Impedanzwandlers 6 ist ferner mit dem Eingang eines Messsignalverstärkers 10 verbunden, der das Messsignal verstärkt und ausgibt. Als Referenz des Messsignalverstärkers 10 dient hier eine Bezugsmasse 37, die mit der internen Bezugsmasse 17 gleich ist. Das Füllstandssignal UL, das ausgewertet wird, ist das Potenzial zwischen dem Ausgang des Messsignalverstärkers 10 und der internen Bezugsmasse 37 bzw. 17.

Um auch eine Temperaturmessung am distalen Ende 45 der Elektrode 4 zu ermöglichen, ist ein Rückführungsleiter 18 für das untere Elektrodenpotenzial 27 aus einem anderen Material gefertigt als die Elektrode 4. Der Rückführungsleiter 18 stellt ein erstes Element 91 aus einem ersten Material, etwa Konstantan, dar, das mit einem zweiten Element 92, nämlich einem Teil 41 der Wand 44 der Elektrode 4, das aus einem zweiten Material wie Edelstahl gefertigt ist, verbunden ist. Das erste Element 91 und das zweite Element 92 sind an einem am distalen Ende 45 der Elektrode 4 gelegenen ersten Übergangspunkt 81 miteinander verbunden und liegen entlang eines Strompfades 93 hintereinander. Ein zweiter Übergangspunkt 82 befindet sich außerhalb des Behälters 3 am oberen oder proximalen Ende 46 der Elektrode. An dem proximalen Ende 46 herrscht eine weitgehend gleichbleibende Temperatur, wohingegen am distalen Ende 45 sich die Temperatur je nach Temperatur der Flüssigkeit bzw. des Füllgutes ändern kann. Da das zweite Element 92 aus einem anderen Material gefertigt ist als das erste Element 41 entsteht eine Potenzialdifferenz zwischen dem ersten Übergangspunkt 81 und dem zweiten Übergangspunkt 82, die zur Bestimmung der Temperatur genutzt werden kann. Dabei wird lediglich der Gleichspannungsanteil der Messspannung verwendet. Ein Temperaturmessmodul 85 weist einen Referenzspannungsverstärker 12 auf, der die zwischen dem ersten Element 91 und dem zweiten Element 92 gemessene, und am Eingang 86 anliegende Gleichspannung verstärkt. Die Referenzspannung UR des Ausgangs 87 gegenüber einer Bezugsmasse 47, die wieder mit der internen Bezugsmasse 17 gleich ist, ist repräsentativ für die gemessene Temperatur.

Abgesehen von dem Stromleiter 25 der Oszillatoranordnung 5 und dem zum Spannungsabgriff dienenden Rückführungsleiter 18 sind sämtliche Teile der Elektronik, insbesondere die Oszillatoranordnung 5 außerhalb der Elektrode 4 angeordnet.

In einer nicht gezeigten Ausführungsform kann auch ein Filtermodul vorhanden sein, das aus der Messspannung einen mit der Oszillatoranordnung phasengleichen Anteil und/oder einen phasenverschiedenen Anteil der Wechselspannung herausfiltert. Der phasengleiche Anteil ist das Nutzsignal und der phasenverschiedenen Anteil ist der Störanteil. Ein solches Filtermodul kann durch elektrische Bauteile realisiert sein. In einer anderen Ausgestaltung kann ein Filtervorgang auch erst mit einer Software erfolgen.

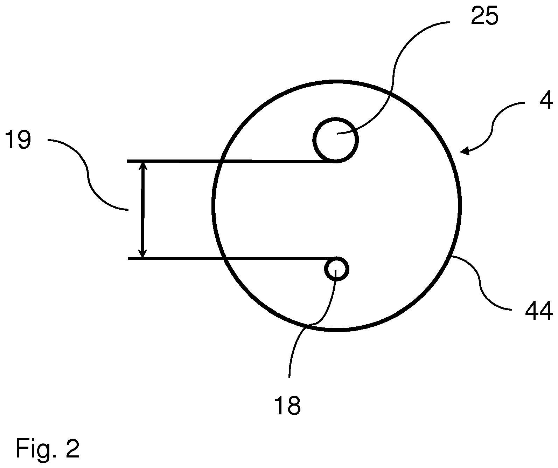

In der Fig. 2 ist ein Querschnitt durch die Elektrode 4 gezeigt. Um Störsignale möglichst klein zu halten, sollten der Rückführungsleiter 18 für das untere Elektrodenpotenzial 27 und der Stromleiter 25, mit dem die Wechselspannung ans untere Elektrodenpotenzial 24 gebracht wird, möglichst nah an der Wand 44 der Elektrode 4 angeordnet sein. Zudem sollte der Abstand 19 zwischen den beiden möglichst groß sein um ein Übersprechen gering zu halten.

## Patentansprüche

1. Sensoranordnung (1) zur potentiometrischen Messung einer Füllstandshöhe (2) in einem Behälter (3), umfassend eine Oszillatoranordnung (5) zur Erzeugung einer Wechselspannung, wobei die Oszillatoranordnung (5) zumindest teilweise in einer elektromagnetisch abschirmenden Schirmanordnung (7) angeordnet ist, deren Potential von dem Potential des Behälters (3) abhängig ist, wobei die Sensoranordnung (1) eine mit der Oszillatoranordnung (5) verbundene, in den Behälter (3) einbringbar ausgestaltete Elektrode (4) aufweist, die aus der Schirmanordnung (7) ragt,
**dadurch gekennzeichnet, dass**
die Schirmanordnung (7) über einen Impedanzwandler (6) mit dem Behälter (3) verbunden ist und ein distales Ende (42) der Elektrode (4) mit einer internen Bezugsmasse (17) des Impedanzwandlers (6) verbunden ist.

2. Sensoranordnung (1) nach Anspruch 1, **dadurch gekennzeichnet, dass** das Potential der Schirmanordnung (7) dem Potential des Behälters (3) nachgeführt ist.

3. Sensoranordnung (1) nach einem der Ansprüche 1 oder 2, **dadurch gekennzeichnet, dass** die Oszillatoranordnung (5) eine Transformatoranordnung (52) und/oder eine Wechselspannungsquelle (51) umfasst und die Transformatoranordnung (52) und/oder die Wechselspannungsquelle (51) in der Schirmanordnung (7) angeordnet ist.

4. Sensoranordnung (1) nach einem der Ansprüche 1 bis 3, **dadurch gekennzeichnet, dass** die Sensoranordnung (1) einen Transformator aufweist, der eine außerhalb der Schirmanordnung (7) liegende Primärseite und eine innerhalb der Schirmanordnung (7) liegende Sekundärseite aufweist, wobei die Primärseite und die Sekundärseite galvanisch voneinander getrennt sind.

5. Sensoranordnung (1) nach einem der Ansprüche 1 bis 4, **dadurch gekennzeichnet, dass** die Sensoranordnung (1) mindestens ein erstes elektrisch leitendes Element (91) aus einem ersten Material und mindestens ein zweites elektrisch leitendes Elemente (92) aus einem zweiten Material umfasst, wobei das erste elektrisch leitende Element (91) und das zweite elektrisch leitende Element (92) entlang eines Strompfades (93) hintereinander liegen, wobei ein Übergangspunkt (81) zwischen dem ersten elektrisch leitenden Element (91) und dem zweiten elektrisch leitenden Element (92) an einem distalen Ende (45) der Elektrode (4) angeordnet ist und weitere Übergangspunkte (82) an mindestens einem vom distalen Ende (45) beabstandeten Temperaturreferenzpunkt angeordnet sind.

6. Sensoranordnung (1) nach Anspruch 5, **dadurch gekennzeichnet, dass** die Sensoranordnung (1) ein Temperaturmessmodul (85) mit einem Eingang (86) umfasst, der dazu ausgestaltet ist, die Spannung zwischen dem ersten elektrisch leitenden Element (91) und dem zweiten elektrisch leitenden Element (92) abzugreifen, wobei an einem Ausgang (87) des Temperaturmessmoduls (85) ein Ausgangssignal ausgebbar ist, das repräsentativ für die Temperatur ist.

7. Sensoranordnung (1) nach einem der Ansprüche 1 bis 6, **dadurch gekennzeichnet, dass** die Sensoranordnung (1) ein Filtermodul aufweist, das aus der Messspannung einen mit der Oszillatoranordnung (5) phasengleichen Anteil und/oder einen phasenverschiedenen Anteil der Wechselspannung herausfiltert.

## Claims

1. Sensor array (1) for the potentiometric measurement of a fill level (2) in a container (3), comprising an oscillator array (5) for generating alternative voltage, whereby the oscillator array (5) is at least partly located in an electro-magnetically shielding array (7) whose potential is dependent on the potential of the container (3), wherein the sensor arrangement (1) has an electrode (4) which can be brought into the container (3) and which is connected to the oscillator arrangement (5) and protrudes out of the screen arrangement (7),
**characterized in that**
the shielding array (7) is connected to the container (3) via an impedance converter (6) and a distal end (42) of the electrode (4) is connected to an internal reference mass (17) of the impedance converter (6).

2. Sensor array (1) in accordance with Claim 1, **characterized in that** the potential of the shielding array (7) tracks the potential of the container (3).

3. Sensor array (1) in accordance with any one of Claims 1 or 2, **characterized in that** the oscillator array (5) comprises a transformer array (52) and/or an alternative voltage source (51) and the transformer array (52) and/or the alternative voltage source (51) are located in the shielding array (7).

4. Sensor array (1) in accordance with any one of Claims 1 to 3, **characterized in that** the sensor array (1) comprises a transformer having a primary side outside of the shielding array (7) and a secondary side lying within the shielding array (7), wherein the primary side and the secondary side are galvanically separated from each other.

5. Sensor array (1) in accordance with any one of Claims 1 to 4, **characterized in that** the sensor array (1) comprises at least one first electrically conductive element (91) made of a first material and at least one second electrically conductive element (92) made of a second material, whereby the first electrically conductive element (91) and the second electrically conductive element (92) are located behind each other along a current path (93), whereby a transition point (81) between the first electrically conductive element (91) and the second electrically conductive element (92) is located at one distal end (45) of the electrode (4) and other transition points (82) are located at least at a temperature reference point located at a distance from the distal end (45).

6. Sensor array (1) in accordance with Claim 5, **characterized in that** the sensor array (1) comprises a temperature measuring module (85) with an input (86), said module being designed to pick off the voltage between the first electrically conductive element (91) and the second electrically conductive element (92), whereby an output signal which is representative of the temperature can be output at an output (87) of the temperature measuring module (85).

7. Sensor array (1) in accordance with any one of Claims 1 to 6, **characterized in that** the sensor array (1) has a filter module which filters out of the measuring voltage a component with the same phase as the oscillator array (5) and/or an phase-differentiated component of the alternative voltage.

## Revendications

1. Ensemble de capteurs (1) pour la mesure potentiométrique d'une hauteur du niveau de remplissage (2) dans une cuve (3) comprenant un ensemble oscillateur (5) pour produire une tension alternative, l'ensemble oscillateur (5) étant disposé du moins en partie dans un ensemble d'écrans (7) protégeant électromagnétiquement dont le potentiel dépend du potentiel de la cuve (3), l'ensemble de capteurs (1) présentant une électrode (4) adaptée pouvant être introduite dans la cuve (3) et reliée à l'ensemble oscillateur (5) qui dépasse de l'ensemble d'écrans (7)
**caractérisé en ce sens que**
l'ensemble d'écrans (7) est relié avec la cuve (3) via un convertisseur d'impédance (6) et une extrémité distale (42) de l'électrode (4) est reliée avec une masse de référence interne (17) du convertisseur d'impédance (6).

2. Ensemble de capteurs (1) selon la revendication 1 **caractérisé en ce que** le potentiel de l'ensemble d'écrans (7) est asservi au potentiel de la cuve (3).

3. Ensemble de capteurs (1) selon l'une des revendications 1 ou 2 **caractérisé en ce que** l'ensemble oscillateur (5) comprend un ensemble transformateur (52) et/ou une source de tension alternative (51) et l'ensemble transformateur (52) et/ou la source de tension alternative (51) sont disposés dans l'ensemble d'écrans (7).

4. Ensemble de capteurs (1) selon l'une des revendications 1 à 3 **caractérisé en ce que** l'ensemble de capteurs (1) présente un transformateur qui présente un côté primaire se trouvant à l'extérieur de l'ensemble d'écrans (7) et un côté secondaire se trouvant à l'intérieur de l'ensemble d'écrans (7), le côté primaire et le côté secondaire étant séparés galvaniquement l'un de l'autre.

5. Ensemble de capteurs (1) selon l'une des revendications 1 à 4 **caractérisé en ce que** l'ensemble de capteurs (1) comprend au moins un premier élément électroconducteur (91) d'une première matière et au moins un second élément électroconducteur (92) d'une seconde matière, le premier élément électroconducteur (91) et le deuxième élément électroconducteur (92) sont situés l'un derrière l'autre le long d'un trajet de courant (93), un point de transition (81) entre le premier élément électroconducteur (91) et le deuxième élément électroconducteur (92) étant disposé à une extrémité distale (45) de l'électrode (4) et d'autres points de transition (82) étant disposés à au moins un point de référence pour la température espacé de l'extrémité distale (45).

6. Ensemble de capteurs (1) selon la revendication 5 **caractérisé en ce que** l'ensemble de capteurs (1) comprend un module de mesure de la température (85) avec une entrée (86) qui est conçue pour prélever la tension entre le premier élément électroconducteur (91) et le deuxième élément électroconducteur (92), un signal de sortie pouvant être sorti à une sortie (87) du module de mesure de la température (85) qui est représentatif de la température.

7. Ensemble de capteurs (1) selon l'une des revendications 1 à 6 **caractérisé en ce que** l'ensemble de capteurs (1) présente un module de filtration qui filtre dans la tension de mesure une partie équiphasée avec l'ensemble oscillateur (5) et/ou une partie déphasée de la tension alternative.
